# EUROPEAN PATENT APPLICATION

(11) **EP 4 644 490 A1**
(43) Date of publication of application: **05.11.2025**
(21) Application number: 25172084.3
(22) Date of filing: 23.04.2025
(51) Int. Cl.: C09C 1/00, C09C 1/40, C09C 1/64

(54) **PASSIVATED PIGMENT WITH CORE ENCAPSULATION**

(30) Priority: 02.05.2024 US 202418653617
(71) Applicant: Viavi Solutions Inc., Chandler, AZ 85286 (US)
(72) Inventor: WITZMAN, Matthew R., Windsor, CA 95492 (US); BRADLEY, Richard A., Santa Rosa, CA 95401 (US)
(74) Representative: Murgitroyd & Company

(57) **Abstract**

A pigment material including an encapsulation material and a flake structure disposed in the encapsulation material. The flake structure includes a core layer, wherein the core layer is a reflector layer, a set of metal barrier layers at least partially encapsulating the core layer, and a set of dielectric layers at least partially sandwiching the set of barrier layers.

## Description

### BACKGROUND

A pigment may use a structure to impart an optical effect when the pigment is viewed. For example, a color shifting pigment may include a pigment that exhibits different hues at different angles at which the pigment is viewed and at different angles of incidence of light. For example, a pigment may appear red at a first angle of viewing or angle of incidence of light and may appear orange or gold at a second angle of viewing or angle of incidence of light. Similarly, a pigment may appear black at a first angle of viewing or angle of incidence of light and may shift to red, orange, and gold as other angles of viewing or angles of incidence of light. A color shifting pigment may achieve a color shift using a set of pigment flakes. A pigment flake or flake structure may include a thin-film material that exhibits a high degree of color shift at different angles of viewing or angles of incidence of light. Thin film based pigments may include a structures for optical effects that can be used for overt or covert identification of product origin, for evaluation of whether a product is genuine, or for artistic effect, among other examples.

### SUMMARY

In some implementations, a pigment material includes an encapsulation material; and a flake structure disposed in the encapsulation material. The flake structure may include a core layer, wherein the core layer is a reflector layer, a set of metal barrier layers at least partially encapsulating the core layer, and a set of dielectric layers at least partially sandwiching the set of barrier layers.

The encapsulation material may include a sol-gel material.

The core layer may include an aluminum core layer.

The set of metal barrier layers may include: a first passivating chromium barrier layer; and a second passivating chromium barrier layer.

The set of metal barrier layers may include an oxidized metal material.

The set of metal barrier layers may completely encapsulate the core layer.

The pigment material may further comprise: a set of absorber layers at least partially sandwiching the set of dielectric layers.

The flake structure may include a plurality of layers of material formed in a corresponding plurality of parallel planes.

The flake structure may include a plurality of layers of material formed in a structured arrangement that imparts an optical or functional effect.

A thickness of a metal barrier layer, of a set of metal barrier layers, may be in a range of between 0.25 nanometers (nm) and 5 nm.

The metal barrier layer may include an oxidized surface.

An amount of gassing of the pigment material may correspond to a characteristic of the set of metal barrier layers.

The set of metal barrier layers may be optically transparent in a configured wavelength with respect to the core layer.

The set of metal barrier layers may limit an amount of water vapor intrusion to a surface of the core layer to less than a threshold amount.

In some implementations, a method includes forming, by a system, an aluminum core layer of a pigment material; depositing, by the system, one or more chromium layers on one or more surfaces of the aluminum core layer of the pigment material; and encapsulating, by the system, the one or more chromium layers and the aluminum core layer of the pigment in a sol-gel encapsulation.

The method may further comprise: heating the one or more chromium layers deposited on the one or more surfaces of the aluminum core layer of the pigment material to cause oxidation of the one or more chromium layers.

The oxidation of the one or more chromium layers may convert at least a threshold percentage of the one or more chromium layers to chromium oxide.

Depositing the one or more chromium layers may comprise: depositing at least a single layer of chromium atoms on the one or more surfaces of the aluminum core layer.

In some implementations, a pigment material includes a sol-gel encapsulation material; and a flake structure disposed in the sol-gel encapsulation material. The flake structure may include a metal core layer and a set of dielectric spacer layers providing a pigment color, and a metal-oxide barrier encapsulating the metal core layer.

The metal-oxide barrier may passivate the metal core layer.

### BRIEF DESCRIPTION OF THE DRAWINGS

Fig. 1 is a diagram of an example flake structure associated with a light interference pigment.
Fig. 2 is a diagram of an example pigment material associated with a light interference pigment with outer absorbers.
Figs. 3A and 3B are diagrams of an example implementation associated with a light interference pigment with a non-planar layer structure.
Fig. 4 is a flowchart of an example process associated with passivated pigment with core encapsulation.

### DETAILED DESCRIPTION

The following detailed description of example implementations refers to the accompanying drawings. The same reference numbers in different drawings may identify the same or similar elements.

Pigment materials may be used to provide a color to a surface. For example, a pigment may be applied to a plastics item, a textile item, a metallic item, or another item. Some pigments may provide a color-shifting functionality. For example, a color-shifting or color-changing pigment may appear to be a first color when viewed or when light is incident at a first angle, but may shift to an appearance as a second color when viewed or when light is incident at a second angle. One technique for achieving a color-shifting pigment is the use of flake structures, with each flake structure exhibiting different hues depending on the angle at which the flake structure is viewed and/or the angle of incidence of light. A flake structure may include one or more layers of material that are configured to appear with a configured color. For example, a thickness of the one or more layers of material may be controlled to produce reflection of light at a configured wavelength, resulting in the appearance of the configured color.

However, in, for example, water-borne paint systems, water may react with a core layer of material, in one or more layers of material of a flake structure of a pigment. Reaction between water and the core layer of material may result in off-gassing, which may result in issues with storage of such paint systems (and pigments thereof). For example, when the core layer of material is an aluminum layer, a reaction between the aluminum layer and water vapor may result in hydrogen off-gassing, which may result in a paint system failing to meet an off-gassing requirement, such as an off-gassing safety requirement.

Some implementations described herein provide an oxide-based encapsulation of a core layer of a pigment material. For example, a flake structure may include a core layer, such as aluminum, and a set of metal barrier layers that at least partially encapsulate the core layer. The set of metal barrier layers may at least partially oxidize to form an oxidized metal material, such as in a presence of heating of the flake structure, thereby passivating the core layer. Based on passivating the core layer of the pigment material, the set of metal barrier layers may prevent a reaction between water vapor and the core layer, thereby reducing off-gassing of the pigment material and a paint system that includes the pigment material. In this way, a pigment material may achieve improved storage and may satisfy off-gassing requirements, such as off-gassing safety requirements.

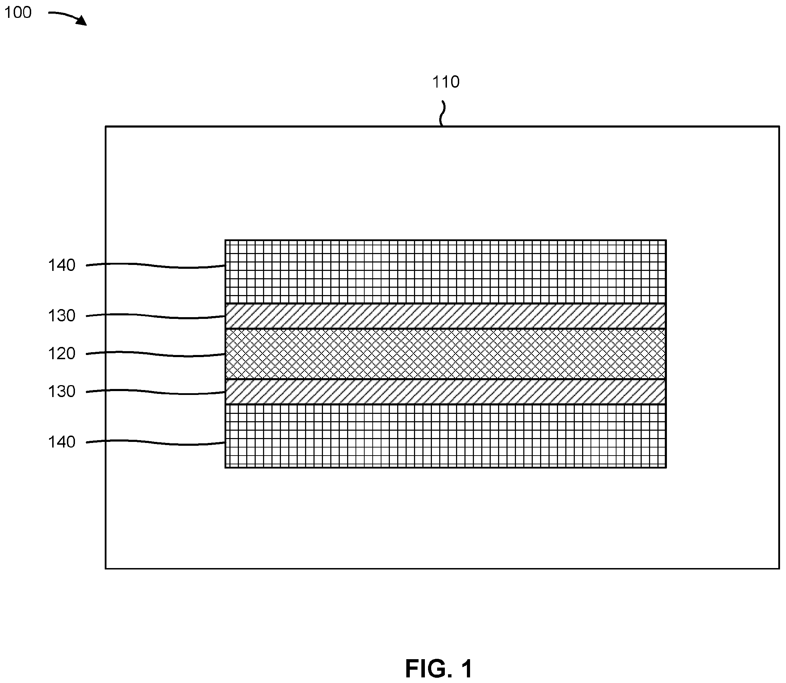

Fig. 1 is a diagram of an example pigment material 100 associated with a light interference pigment. As shown in Fig. 1, pigment material 100 includes an encapsulation material 110, which encapsulates a flake structure. The flake structure includes a core layer 120, a set of barrier layers 130, and a set of dielectric layers 140.

The encapsulation material 110 may include a protective layer that provides chemical stability and/or corrosion resistance to the flake structure and the layers thereof. For example, the encapsulation material 110 may include a silica-based material that coats the flake structure. In some implementations, the encapsulation material 110 may be formed using a particular formation process. For example, the encapsulation material 110 may be a sol-gel protective coating formed by the aggregation of silica particles using a sol-gel process. In some implementations, the encapsulation material 110 may include an oxide material. For example, the silica material of the encapsulation material 110 may include silicon oxide.

The core layer 120 may include one or more reflector layers (e.g., forming a specular reflector) that provides a color or color-shifting characteristic (with the dielectric layer 140, as described below) to the pigment material 100. For example, the core layer 120 may include an aluminum reflector that is configured to reflect light in a configured wavelength range. In this case, a particular wavelength or wavelength range at which light is reflected may shift with a shift in an angle of incidence of the light or an angle of viewing by a viewer. Accordingly, a colorization of the pigment 100 may appear to shift as the angle of incidence of light or the angle of viewing of the pigment 100 shifts. In some implementations, a color of the pigment 100 may be based one or more characteristics of the core layer 120 and/or the dielectric layer 140. For example, the color of the pigment 100 may be based on a thickness of the core layer 120 and/or the dielectric layer 140. Additionally, or alternatively, the color of the pigment 100 may be based on a thickness of one or more other layers, such as a thickness of an outer, absorber layer, as described in more detail herein. For example, the core layer 120, the set of dielectric layers 140, and/or one or more other layers may include one or more thin film layer with thicknesses or surface profiles configured to cause light to be reflected or absorbed at one or more configured wavelengths to cause a colorized appearance of the pigment 100.

The set of barrier layers 130 may include one or more layers of material (e.g., a metal barrier layer) disposed to at least partially encapsulate the core layer 120. For example, the set of barrier layers 130 may partially encapsulate an upper surface and a lower surface of the core layer 120 by covering the upper surface and the lower surface of the core layer 120. Additionally, or alternatively, the set of barrier layers 130 may cover side faces of the core layer 120. In this case, when the set of barrier layers 130 covers the upper surface, the lower surface, and the side faces of the core layer 120, the set of barrier layers 130 may completely encapsulate the core layer 120. In some implementations, the set of barrier layers 130 may be formed from a particular material to passivate the core layer 120 (and the pigment 100). For example, the set of barrier layers 130 may include a passivating chromium barrier layer. The passivating chromium layer may include chromium oxide that covers surfaces of the core layer 120 to prevent water vapor from interacting with the core layer 120 (e.g., which can result in hydrogen formation and off-gassing). In some implementations, other layer materials may be possible, such as other metallic materials that can form an oxide on a surface of the core layer 120. In some implementations, the set of barrier layers 130 may be formed from a portion of the core layer 120. For example, an aluminum core layer may have surfaces oxidized to form an aluminum oxide surface covering the aluminum core layer. In this case, rather than the set of barrier layers 130 being different materials deposited on the core layer 120, the set of barrier layers 130 may be a portion of the core layer 120 that is oxidized to form a different material. In some implementations, another type of barrier layer 130 may be formed. For example, a nitrogenation process may be applied to the core layer 120 (or a material deposited thereon) to form a nitride layer that is a barrier for the core layer 120.

Additionally, or alternatively, the set of barrier layers 130 may include multiple materials. For example, a first layer of a first material and a second layer of a second material may be disposed on the core layer 120 to achieve a particular set of off-gassing reduction parameters, color-shift avoidance parameters, or other characteristics, as described herein. The amount of off-gassing of the core layer 120 may correspond to a characteristic of the barrier layers 130, such as a thickness of the barrier layers 130 and/or an amount of the barrier layers 130 converted from a metal layer to an oxidized metal layer.

In some implementations, the set of barrier layers 130 may be associated with a particular thickness. For example, the set of barrier layers 130 may have a thickness in a range of 0.10 nanometers (nm) to 10 nm or 0.25 nm to 5 nm. In some implementations, the set of barrier layers 130 may have a thickness of 3 nm (e.g., on each side of the core layer 120). In some implementations, the set of barrier layers 130 may each include at least a single mono-layer of chromium atoms to form a barrier layer protecting the core layer 120. For example, a deposition process may deposit at least a single layer of chromium atoms on a surface of the core layer 120.

Additionally, or alternatively, the set of barrier layers 130 may have a maximum thickness associated with an optical effect. For example, when a chromium layer is thicker than a threshold thickness (e.g., thicker than 5 nm or thicker than 10 nm), the chromium layer may cause an effect to a color of the core layer 120. In other words, when the chromium layer is thicker than a threshold amount, a percentage of the chromium that does not oxidize is greater than a threshold percentage. In this case, the oxidized chromium may appear transparent to light, but the non-oxidized chromium may darken or color-shift the core layer 120. For example, a thickness of 3 nm of chromium may result in less than a threshold amount of darkening or color-shifting relative to a core layer 120 without the chromium. Accordingly, the thickness of the chromium layer is selected to avoid such darkening or color-shifting in some use cases. In other uses cases, the thickness of the chromium layer may be selected to cause such darkening or color-shifting. In some implementations, the thickness of the set of barrier layers 130 is selected based on an off-gassing requirement. For example, thicker barrier layers 130 may result in greater off-gassing reductions (relative to a core layer 120 without a barrier layer 130). Accordingly, for some use cases in which a first maximum off-gassing is required, a first thickness may be selected. In contrast, in some other use cases in which a second maximum off-gassing is required, a second thickness may be selected. Other possible barrier layer materials may have other possible thicknesses, color shifting or darkening characteristics, or off-gassing reduction characteristics. Accordingly, other possible barrier layer materials may have thicknesses selected at other ranges.

The set of dielectric layers 140 may at least partially sandwich the set of barrier layers 130. For example, the set of dielectric layers 140 may be disposed on outer surfaces of the set of barrier layers 130, such that a top of a first barrier layer 130 is covered by a first dielectric layer 140 and a bottom of a second barrier layer 130 is covered by a second dielectric layer 140. In some implementations, the set of dielectric layers 140 may fully cover the set of barrier layers 130. The set of dielectric layers 140 may include a glass-like layer that causes a color-shift to light incident on the core layer 120. For example, a dielectric layer 140 may include a silica-based layer that causes a light interference phenomenon and that results in light reflecting of the core layer 120 appearing with a configured color. In some implementations, the configured color is based on a thickness of the dielectric layer 140 may be associated with a color of the pigment material 100. Additionally, or alternatively, a thickness of the dielectric layer 140 may be associated with a color-shift characteristic of the pigment material 100.

In some implementations, the set of dielectric layers 140 may provide structural stability for the flake structure. For example, the set of dielectric layers 140 may add thickness to the flake structure, which may reduce an effect of bending, stress, strain, or impact, among other examples on the flake structure. Additionally, or alternatively, the set of dielectric layers 140 may act as optical spacer layers for light interference types of pigments. In some implementations, the set of dielectric layers 140 may be omitted from the flake structure and/or the pigment material 100. For example, the pigment material 100 may include a core layer 120 encapsulated by the barrier layers 130 without a dielectric layer 140 (e.g., a chromium-aluminum-chromium stack-up). In this case, the carrier layers 130 may provide thickness for the flake structure, thereby improving structural stability for the flake structure relative to an unencapsulated core layer.

In some implementations, the set of dielectric layers 140 may include multiple materials. For example, a dielectric layer 140 may include multiple alternating layers of high refractive index material and low refractive index material, such as hydrogenated silicon (Si:H) and silicon dioxide, respectively. Additionally, or alternatively, the set of dielectric layers 140 may include other low refractive index materials, such as aluminum oxide, magnesium fluoride, or aluminum fluoride, among other examples. Additionally, or alternatively, the set of dielectric layers 140 may include other high refractive index materials, such as zinc oxide, titanium dioxide, or tantalum pentoxide, among other examples. In some implementations, one or more layers described herein may be subject to a hydrogenation, nitrogenation, or annealing procedure. The set of dielectric layers 140 may have a quarter wave optical thickness (QWOT) at a configured wavelength, which may be based on a thickness and refractive index of respective alternating layers therein.

As indicated above, Fig. 1 is provided as an example. Other examples may differ from what is described with regard to Fig. 1.

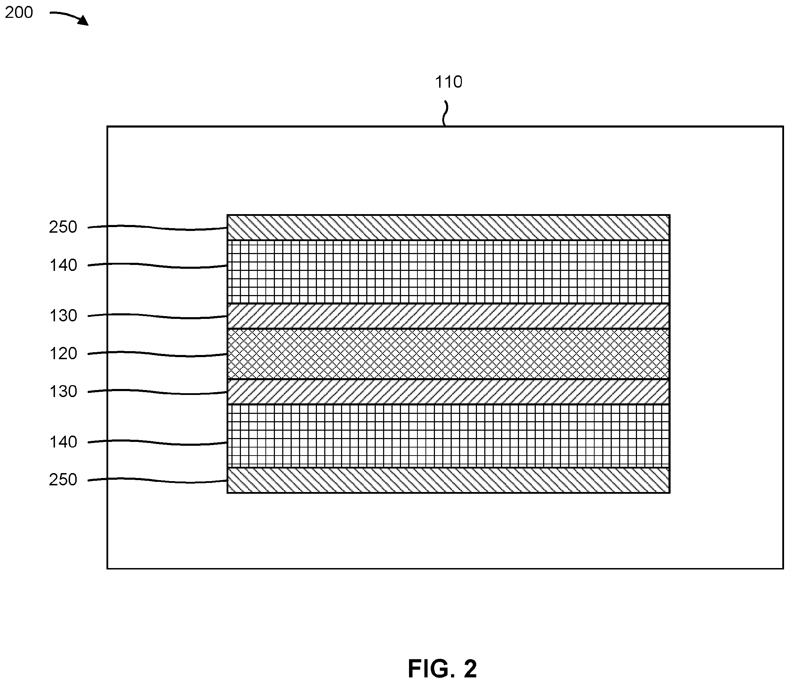

Fig. 2 is a diagram of an example pigment material 200 associated with a light interference pigment with outer absorbers. As shown in Fig. 2, pigment material 200 includes an encapsulation material 110, which encapsulates a flake structure. The flake structure includes a core layer 120, a set of barrier layers 130, a set of dielectric layers 140, and a set of outer layers 250.

The set of outer layers 250 may include one or more absorber layers. For example, the set of outer layers 250 may include one or more semi-transparent absorber layers. In some implementations, the set of outer layers 250 may include a metal absorber layer. For example, the set of outer layers 250 may include a chromium layer, an aluminum layer, a nickel layer, a palladium layer, a platinum layer, a titanium layer, a vanadium layer, a cobalt layer, an iron layer, a carbon layer, a graphite layer, a tin layer, a tungsten layer, a molybdenum layer, a rhodium layer, a niobium layer, or an alloy layer. In some implementations, the set of outer layers 250 may include multiple layers of one or more materials. The set of outer layers 250 may have one or more absorption properties, such as selective absorption of a particular wavelength or polarization of light. The set of outer layers 250 may be disposed around the set of dielectric layers 140 at a thickness that is at least partially absorbing or semi-opaque.

As indicated above, Fig. 2 is provided as an example. Other examples may differ from what is described with regard to Fig. 2.

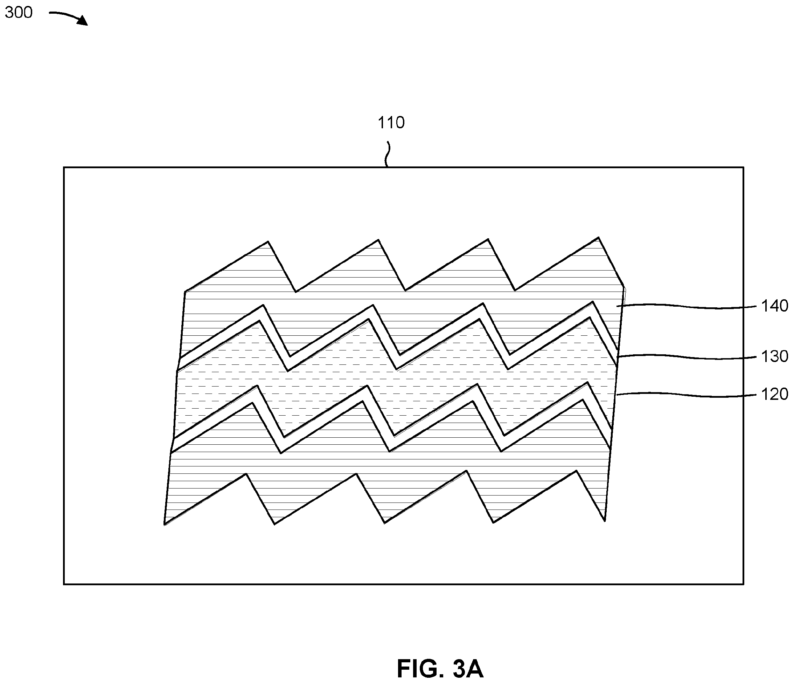

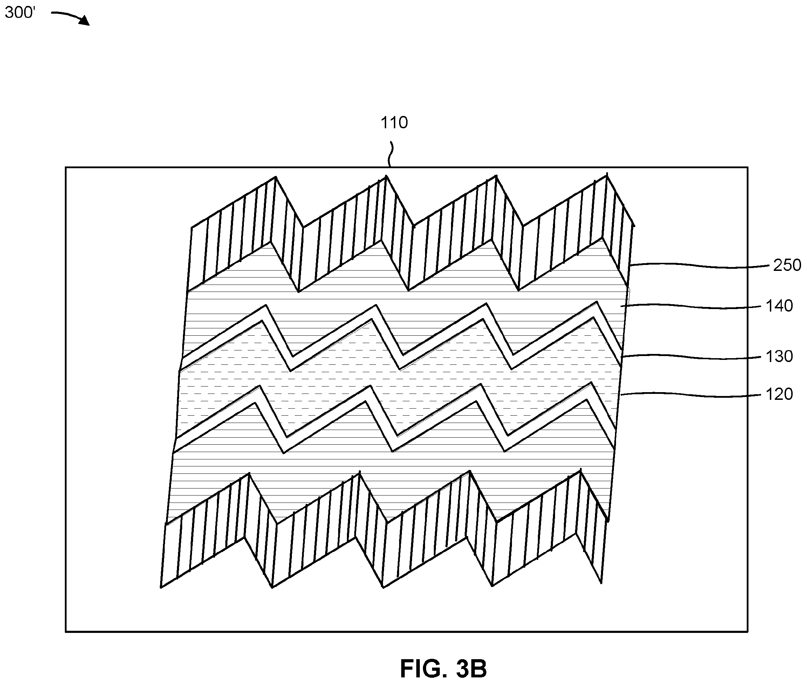

Figs. 3A and 3B are diagrams of an example pigment materials 300/300' associated with a light interference pigment with a non-planar layer structure. As shown in Fig. 3, pigment material 300 includes an encapsulation material 110, which encapsulates a flake structure. The flake structure includes a core layer 120, a set of barrier layers 130, and a set of dielectric layers 140. As shown in Fig. 3B, the flake structure of pigment material 300' may include a set of outer layers 250.

As shown in Figs. 3A and 3B, the pigment material 300/300' may include parallel, non-planar layers. For example, the core layer 120, the set of barrier layers 130, and the set of dielectric layers 140 may be disposed in a sawtooth arrangement or a zigzag arrangement (rather than the parallel plane arrangements, shown in Figs. 1 and 2). In this case, by providing a flake structure with non-planar layers, the pigment material 300/300' may achieve one or more reflection or color-shifting properties. Other types of structured arrangements may be possible, such as crenellated (e.g., grating) arrangements or curved arrangements, among other examples, that impart an optical effect (e.g., color-shifting) or functional effect (e.g., improved rigidity, improved durability, or improved manufacturability), among other examples.

However, a non-planar core layer 120 may have a greater amount of surface area per unit length of the core layer 120. In other words, for the same cross-sectional length of flake structure in Figs. 1 and 3, the flake structure of Figs. 3A and 3B has a core layer 120 with a greater surface area. Accordingly, the barrier layer 130 may provide additional benefits in off-gassing reduction as off-gassing may be based on an amount surface area that can react with water vapor. In other words, a non-planar layer flake structure without a barrier layer exhibits even more off-gassing than a planar layer flake structure without a barrier layer. Accordingly, preventing water vapor intrusion and resulting interaction provides additional benefits when used with a non-planar layer flake structure.

As indicated above, Figs. 3A and 3B are provided as an example. Other examples may differ from what is described with regard to Figs. 3A and 3B.

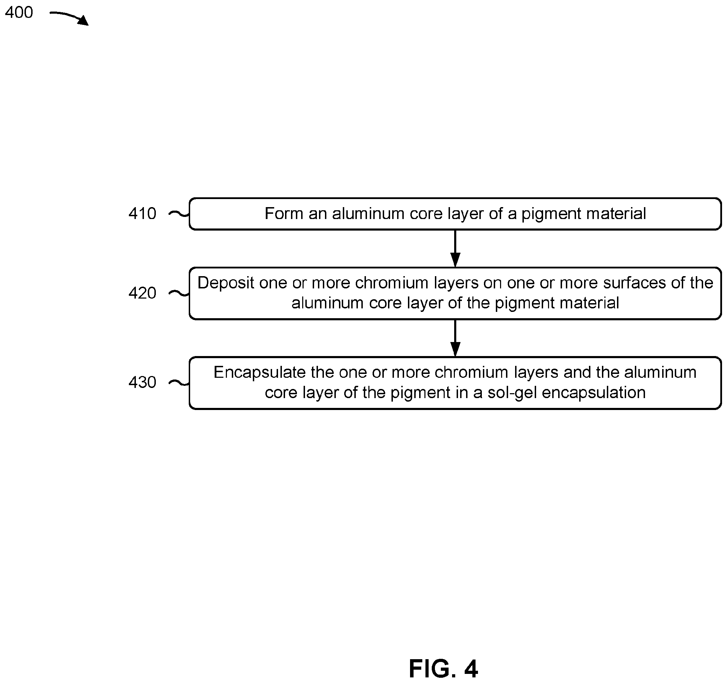

Fig. 4 is a flowchart of an example process 400 associated with passivated pigment with core encapsulation. In some implementations, one or more process blocks of Fig. 4 are performed by a system (e.g., a deposition system, such as a physical vapor deposition (PVD) system, a chemical vapor deposition (CVD) system, a sputtering system, or another type of layer formation or thin film layer formation system).

As shown in Fig. 4, process 400 may include forming an aluminum core layer of a pigment material (block 410). For example, the system may form an aluminum core layer of a pigment material, as described above.

As further shown in Fig. 4, process 400 may include depositing one or more chromium layers on one or more surfaces of the aluminum core layer of the pigment material (block 420). For example, the system may deposit one or more chromium layers on one or more surfaces of the aluminum core layer of the pigment material, as described above. In some implementations, the system may deposit one or more layers of dielectric material onto the one or more chromium layers. For example, the system may deposit alternating layers of high refractive index material and low refractive index material to form a dielectric spacer layer that is configured to pass through a configured wavelength range. Additionally, or alternatively, the system may deposit one or more absorber layers of metal material onto the one or more layers of dielectric material.

As further shown in Fig. 4, process 400 may include encapsulating the one or more chromium layers and the aluminum core layer of the pigment in a sol-gel encapsulation (block 430). For example, the system may encapsulate the one or more chromium layers and the aluminum core layer of the pigment in a sol-gel encapsulation, as described above. The sol-gel encapsulation (e.g., of a silica sol-gel material) may provide further protection to the aluminum core layer and/or the other layers of the material. In some implementations, the system may divide a flake structure into a set of flakes. For example, the flake structure of the core layer, the barrier layers, and the dielectric layers, among other examples, may be divided into a set of flakes and the set of flakes may be encapsulated in the sol-gel encapsulation. In this case, the sol-gel encapsulation provides protection to sides of each flake (as well as a surface of each flake) and the barrier layers provide protection to a top and bottom of each flake (but do not cover exposed sides of the aluminum core layer in each flake).

Process 400 may include additional implementations, such as any single implementation or any combination of implementations described below and/or in connection with one or more other processes described elsewhere herein.

In a first implementation, process 400 includes heating the one or more chromium layers deposited on the one or more surfaces of the aluminum core layer of the pigment material to cause oxidation of the one or more chromium layers. For example, by heating a metal barrier layer disposed on a core layer, the surface of the metal barrier layer may be converted to an oxidized surface. In some implementations, the one or more chromium layers are formed on the one or more surfaces of the aluminum core layer before the aluminum core layer is formed.

In a second implementation, alone or in combination with the first implementation, the oxidation of the one or more chromium layers converts at least a threshold percentage of the one or more chromium layers to chromium oxide. For example, based on oxidizing a metal barrier layer to form an oxidized, passivated surface, an amount of the metal barrier layer that is converted into a metal-oxide barrier layer may be greater than 25%, greater than 50%, greater than 75%, greater than 90%, greater than 95%, or greater than 99%, among other examples. As described above, higher percentages of oxide-metal may be used to achieve higher levels of transparency, thereby reducing an effect on a color of a pigment material. In other words, by oxidizing the metal barrier layer to form a metal-oxide barrier layer, the metal barrier layer is made optically transparent with respect to the core layer (and the dielectric layer) (e.g., the metal barrier layer causes less than a threshold chromatic shift in an appearance of the core layer and dielectric layer).

In a third implementation, alone or in combination with one or more of the first and second implementations, depositing the one or more chromium layers comprises depositing at least a single layer of chromium atoms on the one or more surfaces of the aluminum core layer.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more c components to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A pigment material, comprising:
an encapsulation material; and
a flake structure disposed in the encapsulation material,
the flake structure comprising:
a core layer,
wherein the core layer is a reflector layer,
a set of metal barrier layers at least partially encapsulating the core layer, and
a set of dielectric layers at least partially sandwiching the set of barrier layers.

2. The pigment material of claim 1, wherein the encapsulation material includes a sol-gel material; and/or
wherein the core layer includes an aluminum core layer.

3. The pigment material of claim 1 or claim 2, wherein the set of metal barrier layers includes:
a first passivating chromium barrier layer; and
a second passivating chromium barrier layer.

4. The pigment material of any of claims 1 to 3, wherein the set of metal barrier layers includes an oxidized metal material; and/or
wherein the set of metal barrier layers completely encapsulate the core layer.

5. The pigment material of any of claims 1 to 4, further comprising:
a set of absorber layers at least partially sandwiching the set of dielectric layers.

6. The pigment material of any of claims 1 to 5, wherein the flake structure includes a plurality of layers of material formed in a corresponding plurality of parallel planes or a plurality of layers of material formed in a structured arrangement that imparts an optical or functional effect.

7. The pigment material of any of claims 1 to 6, wherein a thickness of a metal barrier layer, of the set of metal barrier layers, is in a range of between 0.25 nanometers (nm) and 5 nm.

8. The pigment material of any of claims 1 to 7, wherein metal barrier layer includes an oxidized surface.

9. The pigment material of any of claims 1 to 8, wherein an amount of gassing of the pigment material corresponds to a characteristic of the set of metal barrier layers.

10. The pigment material of any of claims 1 to 9, wherein the set of metal barrier layers are optically transparent in a configured wavelength with respect to the core layer; and/or
the set of metal barrier layers limits an amount of water vapor intrusion to a surface of the core layer to less than a threshold amount.

11. A method, comprising:
forming, by a system, an aluminum core layer of a pigment material;
depositing, by the system, one or more chromium layers on one or more surfaces of the aluminum core layer of the pigment material; and
encapsulating, by the system, the one or more chromium layers and the aluminum core layer of the pigment in a sol-gel encapsulation.

12. The method of claim **11,** further comprising:
heating the one or more chromium layers deposited on the one or more surfaces of the aluminum core layer of the pigment material to cause oxidation of the one or more chromium layers;
optionally wherein the oxidation of the one or more chromium layers converts at least a threshold percentage of the one or more chromium layers to chromium oxide.

13. The method of claim 11 or claim 12, wherein depositing the one or more chromium layers comprises:
depositing at least a single layer of chromium atoms on the one or more surfaces of the aluminum core layer.

14. A pigment material, comprising:
a sol-gel encapsulation material; and
a flake structure disposed in the sol-gel encapsulation material,
the flake structure comprising:
a metal core layer and a set of dielectric spacer layers providing a pigment color, and
a metal-oxide barrier encapsulating the metal core layer.

15. The pigment material of claim 14, wherein the metal-oxide barrier passivates the metal core layer.
